# EUROPÄISCHE PATENTSCHRIFT

(11) **EP 3 682 844 B1**
(45) Veröffentlichungstag und Bekanntmachung des Hinweises auf die Patenterteilung: **27.10.2021**
(21) Anmeldenummer: 20151651.5
(22) Anmeldetag: 14.01.2020
(51) Int. Cl.: A61C 9/00, A61C 19/00

(54) **PALETTE**
PALLET
PALETTE

(30) Priorität: 15.01.2019 DE 102019100902
(43) Veröffentlichungstag der Anmeldung: 22.07.2020
(73) Patentinhaber: YETI Dentalprodukte GmbH, 78234 Engen (DE)
(72) Erfinder: BISKUPSKI, Thomas, 78234 Engen (DE)
(74) Vertreter: Patentanwälte und Rechtsanwalt Weiß, Arat & Partner mbB

(56) Entgegenhaltungen:
- WO-A1-2007/073050
- WO-A1-2018/115103
- DE-U1- 20 314 104
- GB-A- 2 501 479

## Beschreibung

### Technisches Gebiet

Die Erfindung betrifft eine Palette nach dem Oberbegriff des Anspruchs 1.

### Stand der Technik

Eine derartige Palette ist beispielsweise in der WO 2018/115103 A1 offenbart. Dort ist eine Palette für die Halterung von Modellierwerkstoff gezeigt, wobei eine Aufnahme, einen Magnet und/oder einen magnetisierbaren Werkstoff umfasst.

Weiter wird auf die GB 2501479 A verwiesen, welche eine Dentalarbeitsstation aufzeigt, die zur Bearbeitung von Dentalwachs geeignet ist.

Weiterhin wird auf die DE 203 14 104 U1 hingewiesen, dort wird eine Hilfsvorrichtung für zahnärztliche oder zahntechnische Behandlung oder weitere manuelle Manipulationen (z. B. Schminken), bestehend aus einem maximal etwa handtellergroßen Behältnis mit Lageraufnahmen für zahnärztliche Hilfsmittel und einer Halterung zur Befestigung des Behältnisses am Arm des Zahnarztes oder Zahntechnikers oder an einem Gelenkarm, der an einem Behandlungstray oder an einem Tisch montiert ist.

In der DE 7906318 U1 wird zudem ein zahntechnisches Kombinationsgerät mit einem Gasbrenner und einem Schmelzenbehälter, wobei am einem Schmelzenbehälter enthaltenden Gehäuse eine Anschlußbuchse und eine Ablage für ein elektrisch betriebenes Handstück vorgesehen sind.

Zudem ist die US 2015 008 4220 A1 zu nennen, welche eine multifunktionale zahnärztliche Arbeitsstation zum Manipulieren und Formen von Dentalwachs offenbart, wobei eine Vielzahl von elektrischen Heizplatten, eine elektrisch gesteuerte Messer-Steckdose, Bedienfelder und eine Induktionsspulenheizung umfasst sind.

Schließlich ist noch der Vollständigkeit halber die WO 2007 073 050 A1 anzuführen, wobei eine thermoelektrische Arbeitsplatte, umfassend: ein Gehäuse, in dem eine Setznut mit vorbestimmter Form und Breite und mit einem geöffneten unteren Abschnitt, in dem eine Bodenplatte durch Schraube befestigt ist, ein thermoelektrisches Modul, das an einem oberen Abschnitt eines Befestigungselements befestigt ist, das in einem unteren Abschnitt der Setznut angeordnet ist und in ein Moduleinbauloch eingesetzt und kombiniert ist, das in einer Bodenfläche der Setznut befestigt ist; ein Wärmerohr, dessen eines Ende in mindestens eine im Befestigungselement gebildete Befestigungsbohrung eingesetzt und kombiniert ist und das in Wärmeableitungslöcher eingesetzt und kombiniert ist, die in einer Vielzahl von Wärmeableitungsplatten in der Rückseite der Innenseite des Gehäuses gebildet sind; einen Kühlventilator, der auf einer Rückseite der Wärmeableitungsplatte angeordnet ist und Wärme, die auf die Wärmeableitungsplatte übertragen wird, an eine Außenseite des Gehäuses abgibt; ein Innenkissen, das auf einem oberen Abschnitt sitzt, in dem das thermoelektrische Modul eingesetzt und in dem Modul-Installationsloch kombiniert wird und bei dem die Temperatur gemäß der Wärmeabsorption und Wärmeableitung des thermoelektrischen Moduls durchgeführt wird; einen Befestigungsbolzen, der in ein erstes Durchgangsloch, das in dem Befestigungselement ausgebildet ist, und ein zweites Durchgangsloch, das in der Setznut ausgebildet ist, um dem ersten Durchgangsloch zu entsprechen, perforiert wird und der mit einem Schraubenloch gekoppelt ist, das in einer vorbestimmten Position eines Bodenabschnitts des Innenkissens perforiert ist; einen Temperaturerfassungssensor, der in einer vorbestimmten Position der Sitznut installiert ist und die Temperatur des Innenkissens erfasst; und eine Steuerung, die die Stromversorgung und das Antreiben des Kühlventilators steuert, so dass das interne Pad auf einer konstanten Temperatur gehalten werden kann, bei der das interne Pad gemäß der vom Temperaturerfassungssensor erfassten Temperatur eingestellt wird.

### Aufgabe der Erfindung

Die Aufgabe der vorliegenden Erfindung ist es, die Nachteile aus dem Stand der Technik zu überwinden. Insbesondere soll eine Palette bereitgestellt werden, die die Handhabbarkeit der aus dem Stand der Technik bekannten Paletten oder dergleichen erhöht.

### Lösung der Aufgabe

Zur Lösung der Aufgabe führen die Merkmale nach dem Anspruch 1.

Vorteilhafte Ausgestaltungen sind in den Unteransprüchen beschrieben.

Eine erfindungsgemässe Palette dient der Halterung von Modellierwerkstoff. Beim Modellierwerkstoff handelt es sich bevorzugt um Wachs in unterschiedlichen Farben. Die auf oder in der Palette gehaltert werden sollen. Dazu weist die Palette eine Aufnahme auf. Die Aufnahme kann hier als Platte in unterschiedlichen Formen und Farben ausgestaltet sein. Ausserdem muss die Aufnahme einen Magnet und/oder einen magnetisierbaren Werkstoff umfassen. Das bedeutet im Einzelnen, dass die Aufnahme beispielsweise aus einem metallenen Werkstoff erstellt wurde. Es ist auch denkbar, dass die Aufnahme einen oder mehrere Magnete aufweist, wobei auch eine Kombination aus beispielsweise einer metallenen magnetisierbaren Platte und einzelnen in der Platte aufgenommenen Magneten möglich sein soll.

Weiter soll der Modellierwerkstoff, bevorzugt Wachs, einen anderen Magneten und/oder magnetisierbaren Werkstoff umfassen. Dazu kann beispielsweise ein aus Wachs hergestelltes Stück den anderen Magneten aufgenommen im Inneren oder am Rande aufweisen, welcher dann mit dem Magneten oder dem magnetisierbaren Werkstoff der Aufnahme wirkverbindbar ist. Das bedeutet manuell verbindbar und wieder lösbar ist.

Weiter kann die Aufnahme einen Medien-Halter aufweisen. In dem Medienhalter kann beispielsweise ein Smartphone oder ein anderes Medienabspielgerät befestigt werden. In dem Medienabspielgerät können dann beispielsweise Video- oder Audio-Übertragungen gemacht werden, die dem Zahntechniker Hinweise für die Verwendung des Modellierwerkstoffs liefert.

Weiter kann die Aufnahme eine Kunststoffverkleidung aufweisen. Dies wäre beispielsweise derart möglich, dass die Aufnahme einen metallenen Kern aufweist, wobei der metallene Kern in die Kunststoffverkleidung eingebracht ist. Die Kunststoffverkleidung kann dabei besser bedruckt werden, um beispielsweise Werbung, Anweisungen oder allgemeine Informationen aufzuweisen. Sie wären auch leichter von Schmutz und Modellierresten zu reinigen.

Ausserdem kann die Aufnahme eine Halteöffnung oder ein Halterelement aufweisen. Dies soll der einfacheren Handhabung durch den Zahntechniker dienen.

Durch das freie Positionieren der Modellierwerkstoff, beispielsweise in Form von Klötzen, kann ergonomisch die beste und angenehmste Position für ein ermüdungsfreies Modellieren gewählt werden.

Staubschutzvorrichtungen aus Tiefziehdeckeln mit Magnet zur Haftung auf der Metallplatte oder mehrteilige Klappvorrichtungen ähnlich der Coverhülle der Smart-Pads wären ebenfalls möglich.

In besonderer Weise ist in der erfindungsgemäßen Palette vorgesehen, dass die Aufnahme ganz oder teilweise beheizbar ist. Dies hat den Vorteil, dass der Modellierwerkstoff entsprechend durch Erwärmung einfacher verarbeitet werden kann.

Dazu weist die Aufnahme ganz oder teilweise eine Heizeinrichtung auf. Ganz oder teilweise bedeutet hierbei, dass die Heizeinrichtung nur in einem Teil der Aufnahme oder diese vollständig ausfüllend vorgesehen sein kann. Damit kann die Aufnahme über die gesamte Oberfläche oder über nur einen Teil der Oberfläche erwärmt oder beheizt werden kann.

Außerdem weist die Kunststoffverkleidung der Aufnahme eine Farbfolie auf. Diese Farbfolie soll zum Einen dem Nutzer anzeigen, welcher Bereich der Aufnahme beheizt ist und zum Anderen soll es die Aufnahme bzw. die Kunststoffverkleidung vor Verschmierungen durch den Modellierwerkstoff schützen, welche durch die Erwärmung des Modellierwerkstoffs entstehen können.

Es kann auch vorgesehen werden, dass unterschiedliche Farbfolien mit unterschiedlichen Temperaturen beheizte Bereiche der Aufnahme anzeigen. Das bedeutet, dass beispielsweise ein Bereich mit einer niedrigeren Temperatur mit einer orangenen Folie bezogen ist und ein anderer Bereich mit einer höheren Temperatur mit einer roten Folie bezogen ist. Vorteilhaft ist hierbei, dass der Nutzer je nach Art des Modellierwerkstoffs oder dessen Verarbeitungsschritt einen entsprechend temperierten Bereich der Aufnahme aussuchen kann, um den Modellierwerkstoff optimal zu be- bzw. verarbeiten. Die eingebauten Temperaturzonen können durch eine integrierte Energiequelle in Form beispielsweise einer Batterie oder durch Kabel aus der Steckdose erwärmt werden. Bei einer Energieversorgung bei einem 230 Volt-Anschluss kann beispielsweise ein Transformator auf 5 Volt Betrieb vorgesehen werden.

Weiter ist vorgesehen, dass die Aufnahme eine Daten- und/oder Energieschnittstelle umfasst. Es kann sich dabei beispielsweise um einen USB-Anschluss oder dergleichen handeln. Es ist aber auch denkbar, dass es sich um eine Funkschnittstelle handeln kann. Eine Kombination der Funkschnittstelle und einer Kabelschnittstelle ist auch möglich.

Außerdem kann die Beheizung der Aufnahme über eine Steuereinrichtung oder eine Smartphone - Applikation über Funk oder Kabel steuerbar sein. Es kann auch vorgesehen sein, dass über einen USB-Stick, welcher in die Daten- und/oder Energieschnittstelle einsteckbar ist, eine Steuerung der Temperaturzonen erfolgen soll. Dabei kann es sich bei der Steuereinrichtung um einen USB-Stick handeln, wobei der USB-Stick Informationen über die üblicherweise benötigten Temperaturzonen zur Verfügung hat und die Aufnahme in unterschiedlichen Bereichen entsprechend beheizt. Das Gleiche kann auch derart geschehen, dass über Funk oder Kabel eine Applikation auf einem Smartphone und/oder Smartpad eine entsprechende Steuerung durch den Nutzer ermöglicht wird.

### Figurenbeschreibung

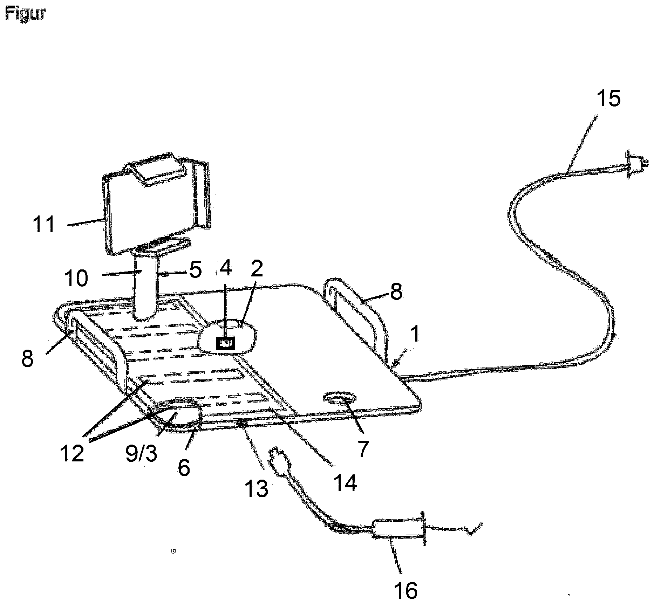

Weitere Vorteile, Merkmale und Einzelheiten der Erfindung ergeben sich aus der nachfolgenden Beschreibung eines bevorzugten Ausführungsbeispiels anhand der einzigen Figur.

### Ausführungsbeispiel

Dort ist eine Aufnahme 1 teilweise geschnitten dargestellt. Die Aufnahme 1 weist eine metallene Platte 9 aus magnetisierbarem Werkstoff 3 dargestellt.

Die metallene Platte 9 ist von einer Kunststoffverkleidung 6 umgeben. Ausserdem ist ein Modellierwerkstoff 2 geschnitten dargestellt. Dort ist gezeigt, wie ein anderer Magnet 4 in dem Modellierwerkstoff 2 angeordnet ist und somit mit der metallenen Platte 9 verbindbar ist.

Ausserdem ist gezeigt, wie die Aufnahme 1 einen Medienhalter 5 aufweist, wobei der Medienhalter 5 in diesem Ausführungsbeispiel aus einem Stab 10 und einer Einspannvorrichtung 11 für beispielsweise Smartphones besteht.

Ausserdem ist gezeigt, dass die Aufnahme 1 eine Halteöffnung 7 und ein Halterelement 8 aufweist.

Die Aufnahme 1 ist hierbei durch eine eingelassene Heizeinrichtung 12 teilweise beheizbar, wobei die Heizeinrichtung 12 im nicht sichtbaren Bereich gestrichelt dargestellt ist und in dem sichtbaren Bereich als durchgängige Linie.

Weiter ist eine Farbfolie 14 gezeigt, welche einen Teil der Oberfläche der Aufnahme 1 bedeckt und den beheizten Bereich anzeigt. Weiter ist eine Daten- und/oder Energieschnittstelle 13 zu erkennen, welche hier als USB-Schnittstelle ausgeführt ist.

**Bezugszeichenliste**

| | |
|---|---|
| 1 | Aufnahme |
| 2 | Modellierwerkstoff |
| 3 | Maqnetisierbarer Werkstoff |
| 4 | Anderer Magnet |
| 5 | Medien-Halter |
| 6 | Kunststoffverkleidung |
| 7 | Halteöffnung |
| 8 | Halterelement |
| 9 | Metallene Platte |
| 10 | Stab |
| 11 | Einspannvorrichtung |
| 12 | Heizeinrichtung |
| 13 | Daten- und/oder Energieschnittstelle |
| 14 | Farbfolie |
| 15 | |
| 16 | |
| 17 | |
| 18 | |
| 19 | |
| 20 | |
| 21 | |
| 22 | |
| 23 | |
| 24 | |
| 25 | |
| 26 | |
| 27 | |
| 28 | |
| 29 | |
| 30 | |
| 31 | |
| 32 | |
| 33 | |

## Patentansprüche

1. Palette für die Halterung von Modellierwerkstoff (2), wobei eine Aufnahme (1), einen Magnet und/oder einen magnetisierbaren Werkstoff (3) umfasst, wobei der Modellierwerkstoff (2) einen anderen Magneten (4) und/oder magnetisierbaren Werkstoff umfasst, wobei die Aufnahme (1) einen Medien-Halter (5) aufweist, wobei die Aufnahme (1) eine Kunststoffverkleidung (6) aufweist und die Kunststoffverkleidung (6) Werbung, Anweisungen oder allgemeine Informationen aufweist, wobei die Aufnahme (1) eine Halteöffnung (7) und ein Halterelement (8) aufweist, wobei die Aufnahme (1) ganz oder teilweise beheizbar ist,
**dadurch gekennzeichnet, dass**
die Kunststoffverkleidung (6) Farbfolien (14) aufweist, und dass unterschiedliche Farbfolien (14) mit unterschiedlichen Temperaturen beheizte Bereiche der Aufnahme (1) anzeigen.

2. Palette nach Anspruch 1, **dadurch gekennzeichnet, dass** die Aufnahme (1) ganz oder teilweise eine Heizeinrichtung (12) aufweist.

3. Palette nach einem der vorigen Ansprüche, **dadurch gekennzeichnet, dass** die Aufnahme (1) eine Daten- und/oder Energieschnittstelle (13) umfasst.

4. Palette nach einem der vorigen Ansprüche, **dadurch gekennzeichnet, dass** die Beheizung der Aufnahme (1) über eine Steuereinrichtung oder eine Smartphone - Applikation über Funk oder Kabel steuerbar ist.

## Claims

1. Pallet for holding modeling material (2), wherein a receptacle (1), comprises a magnet and/or a magnetizable material (3), wherein the modeling material (2) comprises another magnet (4) and/or magnetizable material, wherein the receptacle (1) has a media holder (5), wherein the receptacle (1) has a plastic covering (6) and the plastic covering (6) shows advertising, instructions or general information, wherein the receptacle (1) has a holding opening (7) and a holder element (8), wherein the receptacle (1) is wholly or partially heatable,
**characterized in that**
the plastic covering (6) has colored foils (14), and that different colored foils (14) with different temperatures indicate heated areas of the receptacle (1).

2. Pallet according to claim 1, **characterized in that** the receptacle (1) wholly or partly comprises a heating device (12).

3. Pallet according to any of the previous claims, **characterized in that** the receptacle (1) comprises a data and/or power interface (13).

4. Pallet according to one of the previous claims, **characterized in that** the heating of the receptacle (1) can be controlled via a control device or a smartphone application by a wireless or cable connection.

## Revendications

1. Palette pour le maintien d'un matériau de modelage (2), comprenant un réceptacle (1), un aimant et/ou un matériau aimantable (3), le matériau de modelage (2) comprenant un autre aimant (4) et/ou un matériau aimantable, le réceptacle (1) présentant un maintien de support (5), le réceptacle (1) présentant un revêtement en plastique (6) et le revêtement en plastique (6) présentant une indication publicitaire, des instructions ou des informations générales, le réceptacle (1) présentant une ouverture de maintien (7) et un élément de maintien (8), le réceptacle (1) pouvant être chauffé entièrement ou partiellement,
**caractérisée en ce que**
le revêtement en plastique (6) présente des films colorés (14), et **en ce que** des films colorés (14) différents indiquent des zones du réceptacle (1) qui sont chauffées à des températures différentes.

2. Palette selon la revendication 1, **caractérisée en ce que** le réceptacle (1) présente, entièrement ou partiellement, un dispositif de chauffage (12).

3. Palette selon l'une des revendications précédentes, **caractérisée en ce que** le réceptacle (1) comprend une interface de données et/ou d'énergie (13).

4. Palette selon l'une des revendications précédentes, **caractérisée en ce que** le chauffage du réceptacle (1) peut être commandé par l'intermédiaire d'un dispositif de commande ou d'une application pour mobile multifonction par radio ou par câble.
